# EUROPÄISCHE PATENTSCHRIFT

(11) **EP 0 541 917 B1**
(45) Veröffentlichungstag und Bekanntmachung des Hinweises auf die Patenterteilung: **13.03.1996**
(21) Anmeldenummer: 92114583.5
(22) Anmeldetag: 27.08.1992
(51) Int. Cl.: C04B 35/52, C04B 41/87, C04B 35/56, C04B 35/80, F02K 9/97

(54) **Verfahren zur Herstellung eines oxidationsbeständigen Bauteils auf CFC-Basis, insbesondere für die Raumfahrt**
Method of making oxidation resistant CFC-based articles, preferably for space-flights
Procédé de fabrication des articles résistant à l'oxidation basés sur CFC, en particulier pour l'astronautique

(30) Priorität: 09.11.1991 DE 4136880
(43) Veröffentlichungstag der Anmeldung: 19.05.1993
(73) Patentinhaber: Daimler-Benz Aerospace Aktiengesellschaft, D-81663 München (DE)
(72) Erfinder: Goedtke, Peter, W-8000 München 80 (DE); Blenninger, Ernst, W-8000 München 83 (DE); Lechner, Manfred, W-8000 München 81 (DE); Sindlhauser, Peter, W-8961 Probstried (DE); Papenburg, Ulrich, W-3167 Burgdorf (DE); Goetz, Ulrich, W-8959 Buching (DE)

(56) Entgegenhaltungen:
- DE-A- 3 933 039
- GB-A- 1 457 757

## Beschreibung

Die Erfindung bezieht sich auf ein Verfahren zur Herstellung eines oxidationsbeständigen Bauteils, insbesondere von Hohlkörpern, auf CFC-Basis, insbesondere für die Raumfahrt nach dem Oberbegriff des Anspruchs 1.

Bestimmte Bauteile von Raketentriebwerken, Satelliten, Sonden, Weltraumstationen und Raumtransportern sind extremen Temperaturwechselbeanspruchungen, oxidativen Angriffen und abrasivem Verschleiß ausgesetzt.

Beispielsweise treten bei den Steuer- und Schubdüsen von Raketentriebwerken innerhalb von Millisekunden Temperaturschwankungen von 2000° C und mehr auf. Da die Treibstoffe eines solchen Triebwerks im allgemeinen einen Oxidator enthalten, sind die Düsen außerdem einer extremen Oxidationsbelastung ausgesetzt. Das Verbrennungsgas von Festtreibstoff enthält darüber hinaus meist feste Partikel, wie Bor- oder Aluminiumteilchen, so daß die Düsen auch einem erheblichem abrasivem Verschleiß ausgesetzt sind, zumal das Verbrennungsgas meist mit mehrfacher Überschallgeschwindigkeit aus der Düse austritt. Weiterhin werden sehr hohe Anforderungen an die Oberflächengüte solcher Düsen gestellt, da die Oberflächengüte einen erheblichen Einfluß auf die Ausbildung der Gasströmung (laminare oder turbulente Strömung) hat. Hinzu kommt, daß bestimmte Triebwerke, wie die Steuertriebwerke von Satelliten zur Bahnregelung eine Funktionstüchtigkeit von 10 Jahren und mehr besitzen, also den genannten Beanspruchungen außerordentlich lange ohne jegliche Beschädigung standhalten müssen.

Bestimmte Raketentriebwerke, wie der der "Ariane V", werden durch Feststoff-Treibsätze gezündet. Dazu wird das heiße Verbrennungsgas des Feststofftreibsatzes über einen Gasleitkrümmer dem Raketentriebwerk zugeführt, um dessen Zündung zu vollziehen. Der Gasleitkrümmer ist dadurch über mehrere Sekunden einer Temperatur von weit mehr als 2000° ausgesetzt, wobei der Festtreibstoff wiederum Oxidatoren und die heißen Verbrennungsgase feste Partikel enthalten, so daß der Krümmer auch einer enormen Oxidationsbelastung und hohen Verschleißbeanspruchung ausgesetzt ist.

Für die Düsen und Brennkammern von Triebwerken zur Satellitenbahnregelung werden gegenwärtig meist Legierungen auf Platin-Rhodium-Basis eingesetzt. Diese Legierungen sind nicht nur extrem kostspielig. Da sie einer Gastemperatur von höchstens 1300° C ausgesetzt werden können, erfordern sie darüber hinaus aufwendige Kühleinrichtungen.

Ferner ist es bekannt, in der Raumfahrt plattenförmige Bauteile aus CFC-Werkstoffen d.h. Kohlenfaserverstärkten-Kohlenstoff-Verbundwerkstoffen, einzusetzen (EP 0 359 614 A1 und DE 39 33 039 A1). Die plattenförmigen Bauteile nach der DE 39 33 039 A1 werden dabei entsprechend dem Verfahren nach dem Oberbegriff des Anspruchs 1 hergestellt. Das heißt, es werden Prepregs, die unter Verwendung von Kurzfasern hergestellt sein können, in einer beheizten Presse zu einem plattenförmigen Formkörper verpreßt und dann unter Ausschluß von Sauerstoff das Harz-Bindemittel carbonisiert. Der so hergestellte CFC-Rohling wird durch Gasphasen-Abscheidung mit pyrolytischem Kohlenstoff infiltriert, bis es eine Dichte von mindestens 1,2 g/cm³ besitzt. Dadurch sollen die Kohlenfasern mit einer ausreichend dicken Graphitschicht überzogen werden, um ihre Oxidationsbeständigkeit zu erhöhen. Zur weiteren Verbesserung der Oxidationsbeständigkeit wird nach DE 39 33 039 A1 noch eine keramische Schicht in dem CFC-Material erzeugt. So wird metallisches Silicium im geschmolzenen Zustand infiltriert, das anschließend mit dem pyrolytischen Kohlenstoff zu Siliciumcarbid umgesetzt wird. Dazu wird es als erforderlich angesehen, daß das CFC-Material einen hohen Anteil an pyrolytischem Kohlenstoff aufweist, so daß durch ein entsprechend hohes Angebot an pyrolytischem Kohlenstoff ein höchstmöglicher Umwandlungsgrad des Siliciums zu Siliciumcarbid erhalten wird. Die verbleibende geringe Restmenge an metallischem Silicium wird mit Stickstoff zu Siliciumnitrid oder mit Sauerstoff zu Siliciumoxyd abreagiert.

Der nach DE 39 33 039 A1 erhaltene CFC-Werkstoff zeichnet sich zwar durch eine hohe Oxidationsbeständigkeit aus, er weist jedoch nur eine geringe Temperaturwechselfestigkeit auf.

Ferner ist versucht worden, Hohlkörper für die Raumfahrt, wie die Schub- und Steuerdüsen von Triebwerken, nach der Wickeltechnik herzustellen, also durch Aufwickeln von mit dem Bindemittelharz getränkten Fasern auf einen Wickeldorn. Bei der anschließenden Carbonisierung des Harz-Bindemittels des Wickelkörpers treten jedoch bei derartigen Hohlkörpern mit komplexer Geometrie durch Schwindung und andere Vorgänge Risse und Verformungen auf.

Aus der DE 34 26 911 A1 ist es bekannt, zur Herstellung von oxidationsbeständigen Bauteilen für die Raumfahrt, wie Gasturbinentriebwerke, das CFC-Bauteil durch Einbetten in Silicium-Carbid-Pulver mit einer Siliciumcarbid-Schicht und dann durch chemische Gasphasenabscheidung mit einer Siliciumnitrid-Schicht zu versehen. Da die keramischen SiC- und Si₃N₄-Oxidationsschutzschichten an der Oberfläche des Bauteils einen anderen Wärmeausdehnungskoeffizienten besitzen als CFC,
kommt es jedoch bei starken
Temperaturwechselbeanspruchungen schnell zu Rissbildungen und nach kurzer Zeit zu einer Sauerstoffdiffusion in das CFC-Substrat, wodurch die Kohlenstoff-Fasern abbrennen und das betreffende Bauteil versagt.

GB-A-1 457 757 beschreibt die Herstellung von CFC-Verbubdkörpern aus einer Martix bestehend aus SiC und elementarem Si, durch Eintauchen teilweise oder ganz der Materialien in geschmolzenem Silizium, ohne auf die Dichten des Vollkörpers und des Rohlings zu achten.

Aufgabe der Erfindung ist es, ein einfaches und kostengünstiges Verfahren anzugeben, mit dem auch kompliziert geformte Bauteile, wie Hohlkörper, auf CFC-Basis hergestellt werden können, die extremen Temperaturwechselbeanspruchungen standhalten und zugleich eine hohe chemische Beständigkeit, insbesondere Oxidationsbeständigkeit, Verschleißfestigkeit sowie eine hohe Oberflächenqualität besitzen.

Dies wird erfindungsgemäß mit dem im Anspruch 1 gekennzeichneten Verfahren erreicht. In den Ansprüchen 2 bis 15 sind vorteilhafte Ausgestaltungen des erfindungsgemäßen Verfahrens angegeben, und in den Ansprüchen 16 und 17 vorteilhafte Anwendungen des Verfahrens zur Herstellung bestimmter Bauteile in der Raumfahrt.

Das erfindungsgemäße Bauteil weist einen hohen Gehalt von mindestens 15 Gew.-%, vorzugsweise mindestens 30 Gew.-% an metallischem Silicium auf. Unter metallischem Silicium ist dabei elementares Silicium zu verstehen.

Überraschenderweise hat sich gezeigt, daß das erfindungsgemäß hergestellte Bauteil auf CFC-Basis trotz dieses hohen Anteils an (nicht zu Siliciumcarbid umgesetztem) metallischem Silicium eine hohe Temperaturwechsel-Beständigkeit und Oxidationsfestigkeit besitzt. Dieses Ergebnis ist deswegen überraschend, weil die erfindungsgemäßen Bauteile Temperaturen ausgesetzt werden, die weit über dem Schmelzpunkt von metallischem Silicium von 1412° C liegen. Silicium dehnt sich beim Erstarren jedoch stark aus. Dadurch sind bei Temperaturwechselbelastungen des Verbundmaterials, bei denen das Silicium schmilzt und wieder erstarrt, Risse sowie Delaminierungen an der Grenzfläche zwischen dem metallischen Silicium und den übrigen Kohlenstoff- und Siliciumcarbid-Komponenten des Verbundmaterials zu erwarten, die zu einem Eindringen von Sauerstoff in das Material, Abbrennen der Verstärkungsfasern u. dgl. Problemen führen. Darüber hinaus stellt metallisches Silicium ein ausgesprochen sprödes Material dar. Bei einem hohen Anteil an metallischem Silicium in CFC-Bauteilen, wie er erfindungsgemäß angewendet wird, ist daher zu erwarten, daß sich auch diese Eigenschaft auf das Bauteil auswirkt, so daß es aufgrund seiner Sprödigkeit zu Rißbildung, Sprödbruch u. dgl. neigt.

Daß diese an sich zu erwartenden negativen Eigenschaften eines hohen Anteils an metallischem Silicium bei dem nach dem erfindungsgemaßen Verfahren hergestellten Bauteil nicht eintreten, dürfte darauf zurückzuführen sein, daß das metallische
Silicium in den Poren des erfindungsgemäß hergestellten CFC-Bauteils eine viskose Schmelze bildet, wenn das Bauteil, wie erfindungsgemäß vorgesehen, Temperaturen von 1500° C und mehr ausgesetzt wird. Etwaige Risse, die sich bei hoher Temperatur in dem Verbundmaterial auszubilden beginnen, laufen damit in die Schmelzphase hinein, wodurch die Rißenergie absorbiert wird, so daß die im Entstehen befindlichen Risse sofort ausgeheilt werden.

Damit das metallische Silicium bei Temperaturwechselbeanspruchungen schmelzen und unter Volumenzunahme wieder erstarren kann, muß ein entsprechendes freies Porenvolumen im Bauteil sichergestellt sein. Das heißt, bei dem erfindungsgemäß hergestellten Bauteil nimmt das metallische Silicium zwar im wesentlichen den gesamten, also vorzugsweise mehr als 80 Vol.-%, insbesondere mehr als 90 Vol.-% des Porenvolumens ein, ein Restvolumen von vorzugsweise mindestens 5 Vol.-% soll jedoch frei bleiben.

Neben der geschilderten Unterbindung kritischer Risse wird durch den hohen Anteil an metallischem Silicium in dem erfindungsgemäß hergestellten Bauteil die Oxidationsbeständigkeit dadurch erhöht, daß das metallische Silicium bei Einsatz des Bauteils in oxidativer Umgebung mit Sauerstoff zu Siliciumoxid reagieren kann, das eine zusätzliche Oxidationsschutzschicht bildet.

Weiterhin hat sich gezeigt, daß durch den hohen Siliciumgehalt und damit die hohe Dichte das erfindungsgemäße Bauteil einer einwandfreien Oberflächenbearbeitung unterzogen werden kann, um die geforderte hohe Oberflächengüte zu erreichen. Die Oberflächenbearbeitung kann dabei mit den üblichen Bearbeitungsmaschinen erfolgen.

Der Gehalt an metallischem Silicium des erfindungsgemäßen Bauteils muß mindestens 15 Gew.-% betragen und soll 40 Gew.-% nicht überschreiten. Bei einem metallischem Silicium-Gehalt von weniger als 15 Gew.-% tendiert das erfindungsgemäße Bauteil dazu, die Eigenschaften eines Keramik-Bauteils zu besitzen, also insbesondere ein Sprödbruchverhalten zu zeigen. Bei metallischen Siliciumgehalten von über 40 Gew.-% kann es aufgrund der massiven Volumenexpansion des metallischen Siliciums beim Erstarren zur Zerstörung der Bauteile kommen.

Die erfindungsgemäß hergestellten Bauteile sind vor allem für solche Bauteile in der Raumfahrt bestimmt, die abgesehen von einer komplizierten Geometrie, also beispielsweise Hohlkörpern, einer hohen Temperaturwechselbeanspruchung standhalten und eine hohe Oxidationsfestigkeit aufweisen müssen. Neben Antennen, Reflektoren, Hitzeschilden, Auskleidungen für Raketenbrennkammern und Expansionsdüsen jeglicher Geometrie, Baugröße und Schubkraft, ist das erfindungsgemäße Verfahren insbesondere zur Herstellung der Düsen der Steuertriebwerke zur Satellitenbahnlageregelung sowie zur Herstellung der Innenauskleidung des Gasleitkrümmers zur Zündung von Raketentriebwerken geeignet. Diese Bauteile werden zum Teil zyklisch in Millisekunden bis Sekundenzeiträumen Temperaturwechseln von 2000° C und mehr bei gleichzeitigem abrasivem Verschleiß durch die Verbrennungsgase ausgesetzt, wobei insbesondere bei Düsen von Triebwerken zur Satellitenbahnregelung eine langjährige Lebensdauer unter derart extremen Bedingungen gefordert wird.

Bei dem erfindungsgemäßen Verfahren wird zunächst ein Vollkörper aus CFC-Material hergestellt. Der Vollkörper besitzt eine Dichte von höchstens 0,8 g/cm³, vorzugsweise 0,1 bis 0,6 g/cm³, d.h. er weist eine hohe Porosität auf. Abgesehen von den Poren weist der Vollkörper keine Hohlräume auf, d.h., er ist von seiner Form her ein massiver Körper, z.B. ein Block oder ein Vollzylinder. Zur Herstellung des CFC-Vollkörpers werden Kohle-, vorzugsweise Graphitfasern, mit einer Länge von 1 bis 50 mm, vorzugsweise 2 bis 20 mm, eingesetzt. Die Kurzfasern werden in dem in einem Lösungsmittel dispergierten, also insbesondere gelösten, wärmehärtbaren Harz-Bindemittel in einer Menge von vorzugsweise 5 bis 10 Gew.-% suspendiert. Die Suspension wird anschließend in eine Form gegeben, und das Lösungsmittel z.B. durch Erwärmen und/oder Vakuum entfernt. Anschließend wird das Harz-Bindemittel in der Form und damit der Vollkörper ausgehärtet, der dann im Vakuum einer Temperatur von beispielsweise 900 bis 1300° C ausgesetzt wird, um das Bindemittelharz zu carbonisieren. Die Kurzfasern liegen in der carbonisierten C-Matrix damit statistisch verteilt, also völlig unorientiert vor. Dadurch, daß erfindungsgemäß ausschließlich Kurzfasern als Verstärkungsfasern verwendet werden, die völlig unorientiert in dem Werkstoff vorliegen, wird ein isotropes, homogenes Werkstoffverhalten erzielt. Derartige Kurzfasern enthaltende CFC-Werkstoffe werden auch als CBCF (= Carbon Bonded Carbon Fiber) bezeichnet.

Der Vollkörper wird dann vorzugsweise noch in einer Vakuum- oder Schutzgasatmosphäre auf eine Temperatur von mehr als 2000° C erhitzt, um eine Graphitierung der C-Matrix durchzuführen.

Durch materialabtragende Bearbeitung wird dann aus dem Vollkörper der entsprechende CFC-Rohling hergestellt, der die Maße des herzustellenden Bauteils, also beispielsweise der Düse eines Raketentriebwerks, besitzt. Die materialabtragende Bearbeitung kann beispielsweise durch Drehen, Fräsen oder Schleifen erfolgen, wobei die zur spanabhebenden Bearbeitung von metallischen Werkstoffen bekannten Maschinen eingesetzt werden können. Der Rohling, der wie der Vollkörper eine geringe Dichte von 0,1 bis 0,8 g/cm³ und damit eine hohe Porosität von bis zu 80 Vol-% aufweist, wird anschließend durch chemische Gasphasenabscheidung (CVD) mit pyrolytischem Kohlenstoff bis zu einer Dichte von 0,6 bis 1,0 g/cm³ infiltriert. Die Dichte von 1,0 g/cm³ darf keinesfalls überschritten werden, da sonst nicht die erforderliche Porosität von 10 bis 70 Vol.-%, vorzugsweise 20 bis 50 Vol.-%, gewährleistet ist, die erforderlich ist, um anschließend eine ausreichende Menge metallisches Silicium zu infiltrieren. Die chemische Gasphasenabscheidung des Kohlenstoffs wird vorzugsweise mit einem Gemisch aus einem Kohlenwasserstoff, wie Methan, und einem inerten Trägergas, wie Stickstoff, bei einer Temperatur zwischen 800 und 1200° C bei einem Druck von 1 bis 10 Millibar durchgeführt.

Der pyrolytische Kohlenstoff wird dabei vorzugsweise an den Oberflächen der Kurzfasern bzw. an den Faserkreuzungspunkten abgeschieden und umhüllt diese, wodurch eine Festigkeitssteigerung erzielt wird. Außerdem dient der pyrolytische Kohlenstoff als Kohlenstoffspender für die anschließende Siliciumcarbid-Bildung.

Nach der Infiltration des Rohlings mit pyrolytischem Kohlenstoff wird der Rohling mit einer solchen Menge an geschmolzenem metallischem Silicium infiltriert, daß seine Dichte mehr als 1,8, vorzugsweise mehr als 2 g/cm³ beträgt. Dazu wird der Rohling beispielsweise in einer Hochtemperatur-Vakuum-Kammer mit seinem unteren Ende in flüssiges Silicium getaucht. Durch die dem porösen Rohling innewohnenden Kapillarkräfte wird dann das geschmolzene Silicium in dem Rohling nach oben gesaugt, ähnlich wie bei einem Docht.

Anschließend wird die Temperatur auf 1600 bis 2200° C erhöht, wodurch ein Teil des metallischen Siliciums in dem Rohling mit dem auf den Fasern abgeschiedenen pyrolytischen Kohlenstoff zu oxidationsbeständigen Siliciumcarbid umgewandelt wird. Der in dem Rohling enthaltene Anteil des metallischen Siliciums muß jedoch nach der Umwandlung noch 15 bis 40 Gew.-% des Rohlings betragen.

Das so hergestellte Bauteil kann dann noch einer Nachbearbeitung unterzogen werden, beispielsweise um bei einer Raketentriebwerksdüse den Strömungswiderstand der heißen Verbrennungsgase an der Grenzschicht herabzusetzen. Zur Nachbearbeitung können die von der spanabhebenden Bearbeitung von Metallen bekannten Werkzeuge verwendet werden, insbesondere auch Diamantwerkzeuge.

Nachstehend ist die Erfindung anhand der Zeichnung näher erläutert. Darin zeigen jeweils im Schnitt:
- Fig. 1: die Brennkammer mit Expansionsdüse eines Raketentriebwerks zur Satellitenbahnlageregelung und
- Fig. 2: einen Gasleitkrümmer zur Zündung von Raketentriebwerken.

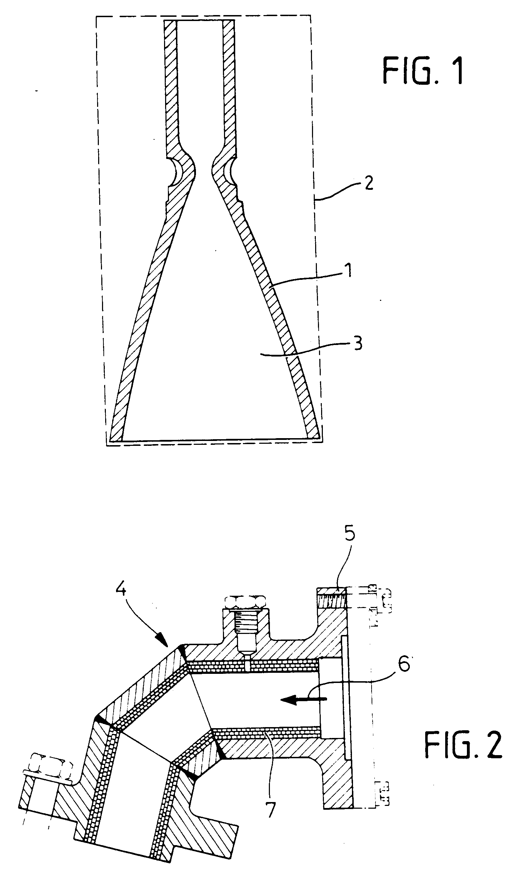

Die Düse 1 gemäß Fig. 1 wird aus einem in der Zeichnung gestrichelt dargestellten CFC-Vollkörper mit einer Dichte von 0,1 bis 0,8 g/cm³, d.h. hoher Porosität durch Ausfräsen des Hohlraums 3 der Düse und entsprechendem Materialabtrag an der Außenseite hergestellt. Der Vollkörper 2 kann ein Block oder ein Vollzylinder sein.

Gemäß Fig. 2 ist ein rohrförmiger Gasleitkrümmer 4 mit seinem Flansch 5 an ein nicht dargestelltes Raketentriebwerk angeschlossen. Entsprechend dem Pfeil 6 strömen durch den Gasleitkrümmer 4 die heißen Verbrennungsgase eines Festtreibstoffs in das Triebwerk, um dieses zu zünden. Der Gasleitkrümmer 4 ist innen mit einer Auskleidung 7 versehen, die aus dem erfindungsgemäß hergestellten Material besteht.

Das nachstehende Beispiel dient der weiteren Erläuterung der Erfindung.

### Beispiel:

Kurzfasern auf Graphitbasis mit einer Länge von 3 bis 10 mm werden in einer Phenolharzsuspension aufgeschlämmt. Der Fasergehalt in der Suspension kann 5 bis 60 Gew.-% betragen. Die Suspension wird in eine Form eingefüllt, und das Lösungsmittel des Phenolharzes bei 70° C durch Absaugen entfernt. Bei weiterer Temperatursteigerung auf 150° C wird das Phenolharz ausgehärtet. Der nach dem Entformen erhaltene Vollkörper, beispielsweise ein Block, wird nun in einem Reaktor unter Ausschluß von Sauerstoff, d.h. im Vakuum oder in einer Schutzgasatmosphäre, bei etwa 1000° C carbonisiert. Der erhaltene CFC-Vollkörper mit isotropem Aufbau weist eine Porosität von etwa 80 Vol.-% auf. Um die Reaktivität der Kohlenstoff-Fasern gegenüber Sauerstoff zu minimieren, wird der Vollkörper einer Temperatur von mehr als 2000° C unter Sauerstoffausschluß, d.h. im Vakuum oder in einer Schutzgasatmosphäre, ausgesetzt, wodurch der durch Carbonisieren des Phenolharzes gebildete Matrix-Kohlenstoff zumindest teilweise graphitiert wird. Der Vollkörper besitzt eine Dichte von 0,4 g/cm³.

Aus dem Vollkörper wird dann maschinell durch Dreh-, Fräs- und/oder Schleifbearbeitung der in Fig. 1 dargestellte Rohling für die Brennkammer eines Triebwerks zur Satellitenlageregelung hergestellt.

Der Rohling wird in einem Reaktor 100 Std. bei 950° C und bei einem Partialdruck von 5 Millibar unter Verwendung von Methan und Stickstoff im Verhältnis 1 : 3 durch chemische Gasphasenabscheidung mit pyrolytischem Kohlenstoff infiltriert, bis seine Dichte 0,75 g/cm³ beträgt und seine offene Porosität auf ca. 40 % abgenommen hat.

Danach wird der Rohling in einer Hochtemperatur-Vakuumkammer in ein Gefäß gestellt, dessen Boden mit geschmolzenem metallischen Silicium bedeckt ist. Durch die Kapillarkräfte steigt das geschmolzene Silicium in dem Rohling nach oben, wodurch die Poren fast ganz mit metallischem Silicium gefüllt werden.

Anschließend wird der Rohling in der Hochtemperatur-Vakuumkammer innerhalb von 3 Std. auf eine Temperatur von etwa 2000° C gebracht, wodurch ein Teil des metallischen Siliciums mit pyrolytischem Kohlenstoff zu Siliciumcarbid umgesetzt wird. Nach dem Abkühlen auf Raumtemperatur weist das Bauteil eine Dichte von 2,1 g/cm³ auf. Der Gehalt des Bauteils an metallischem Silicium beträgt 34 %.

Die so hergestellte Brennkammer wird noch einer Oberflächennachbearbeitung unterworfen.

Die Brennkammer wurde einem Heißtest unterzogen, mit einem Gemisch von Stickstofftetroxid und Monomethylhydrazin betrieben. Die Brenndauer betrug 1000 sec.. Der Gewichtsverlust der Brennkammer betrug 3 %. Delaminationen und Rißbildungen konnten nicht festgestellt werden. An der Bauteiloberfläche wurde eine helle SiO₂-Passivierungsschicht festgestellt. Der 3 %ige Gewichtsverlust dürfte auf eine Diffusion des metallischen Siliciums zurückzuführen sein.

## Patentansprüche

1. Verfahren zur Herstellung eines oxidationsbeständigen Bauteils, insbesondere für die Raumfahrt, bei dem aus Kohlenstoff-Kurzfasern und einem härtbaren Harz-Bindemittel durch Carbonisieren des Harz-Bindemittels ein ungerichtete Kohlenstoff-Kurzfasern aufweisender CFC-Rohling mit den Maßen des Bauteils hergestellt wird, worauf der CFC-Rohling mit pyrolytischem Kohlenstoff und dann mit geschmolzenem Silicium infiltriert wird, wobei das Silicium mit dem pyrolytischen Kohlenstoff teilweise zu Siliciumcarbid umgesetzt wird, **dadurch gekennzeichnet,** daß aus den Kohlenstoff-Kurzfasern und dem härtbaren Harz-Bindemittel ein CFC-Vollkörper mit einer Dichte von höchstens 0,8 g/cm³ hergestellt wird, daß aus dem CFC-Vollkörper der CFC-Rohling mit den Maßen des Bauteils durch materialabtragende Bearbeitung hergestellt wird, daß der CFC-Rohling mit dem pyrolytischen Kohlenstoff bis zu einer Dichte von höchstens 1,0 g/cm³ infiltriert wird, daß der mit dem pyrolytischen Kohlenstoff infiltrierte CFC-Rohling mit einer solchen Menge geschmolzenen Siliciums infiltriert wird, daß seine Dichte mehr als 1,8 g/cm³ beträgt, und daß die Umsetzung des Siliciums mit dem pyrolytischen Graphit so geführt wird, daß der Gehalt des unumgesetzten metallischen Siliciums in dem Bauteil wenigstens 15 Gew.-% des Bauteils beträgt.

2. Verfahren nach Anspruch 1, **dadurch gekennzeichnet,** daß ein CFC-Vollkörper mit einer Dichte von 0,1 bis 0,6 g/cm³ hergestellt wird.

3. Verfahren nach Anspruch 1 oder 2, **dadurch gekennzeichnet,** daß die Kohlenstoff-Kurzfasern eine Länge von 1 bis 50 mm aufweisen.

4. Verfahren nach einem der vorstehenden Ansprüche, **dadurch gekennzeichnet**, daß zur Herstellung des CFC-Vollkörpers die Kohlenstoff-Kurzfasern in dem in einem Lösungsmittel dispergierten, wärmehärtbaren Harz-Bindemittel in einer Menge von 5 bis 60 Gew.-% suspendiert werden, worauf die Suspension in eine dem CFC-Vollkörper entsprechende Form gebracht und das Harz-Bindemittel ausgehärtet und anschließend carbonisiert wird.

5. Verfahren nach einem der vorstehenden Ansprüche, **dadurch gekennzeichnet,** daß der CFC-Vollkörper nach der Carbonisierung des Harz-Bindemittels zur Graphitierung einer Temperatur von mindestens 2000° C ausgesetzt wird.

6. Verfahren nach einem der vorstehenden Ansprüche, **dadurch gekennzeichnet,** daß als Harz-Bindemittel ein Phenolharz verwendet wird.

7. Verfahren nach einem der vorstehenden Ansprüche, **dadurch gekennzeichnet,** daß als Kohlenstoff-Kurzfasern Graphitfasern verwendet werden.

8. Verfahren nach einem der vorstehenden Ansprüche, **dadurch gekennzeichnet,** daß die materialabtragende Bearbeitung des CFC-Vollkörpers zu dem CFC-Rohling durch Drehen, Fräsen und/oder Schleifen erfolgt.

9. Verfahren nach einem der vorstehenden Ansprüche, **dadurch gekennzeichnet,** daß der CFC-Rohling bis zu einer Dichte von 0,6 bis 0,9 g/cm³ mit pyrolytischem Kohlenstoff infiltriert wird.

10. Verfahren nach einem der vorstehenden Ansprüche, **dadurch gekennzeichnet,** daß der CFC-Rohling mit dem pyrolytischen Kohlenstoff so lange infiltriert wird, daß ein freies Porenvolumen des CFC-Rohlings von 10 bis 70 Vol.-% verbleibt.

11. Verfahren nach einem der vorstehenden Ansprüche, **dadurch gekennzeichnet,** daß das Infiltrieren des Rohlings mit dem pyrolytischen Kohlenstoff durch chemische Gasphasenabscheidung erfolgt.

12. Verfahren nach Anspruch 11, **dadurch gekennzeichnet,** daß die chemische Gasphasenabscheidung mit einem Gemisch aus einem Kohlenwasserstoff und einem inerten Trägergas bei einer Temperatur zwischen 800 und 1200 ° C und einem Druck von 1 bis 100 Millibar durchgeführt wird.

13. Verfahren nach einem der vorstehenden Ansprüche, **dadurch gekennzeichnet,** daß der CFC-Rohling mit einer solchen Menge geschmolzenem Silicium infiltriert wird, daß seine Dichte mehr als 2 g/cm³ beträgt.

14. Verfahren nach einem der vorstehenden Ansprüche, **dadurch gekennzeichnet,** daß der CFC-Rohling zum Infiltrieren mit dem geschmolzenen Silicium mit seinem unteren Ende in geschmolzenes Silicium gestellt wird, wobei das geschmolzene Silicium durch die Kapillarkräfte des Rohlings in dem Rohling nach oben steigt.

15. Verfahren nach einem der vorstehenden Ansprüche, **dadurch gekennzeichnet,** daß der Gehalt des unumgesetzten metallischen Siliciums in dem Bauteil 25 bis 40 Gew.-% beträgt.

16. Anwendung des Verfahrens nach einem der vorstehenden Ansprüche zur Herstellung von Hohlkörpern.

17. Anwendung nach Anspruch 16 zur Herstellung der Brennkammer oder Düse eines Triebwerks zur Satellitenlageregelung sowie des Gasleitkrümmers zur Zündung eines Raketentriebwerks.

## Claims

1. A process for manufacturing an oxidation-resistant component, in particular for space projects, producing from short carbon fibres and a resin bonding agent which is capable of being hardened by carbonizing the resin bonding agent a CFC blank of the dimensions of the component and comprising non-oriented short carbon fibres, whereafter the CFC blank is infiltrated by pyrolytic carbon and thereafter by melted silicon, and that the silicon is partially converted with the pyrolytic carbon into silicon carbide, **characterized in that** from the short carbon fibres and the resin bonding agent which is capable of being hardened is produced a CFC solid body with a density of maximum 0.8 g/cm³, that from the CFC solid body is produced the CFC blank in the dimensions of the component by a material removing process, that the CFC blank is infiltrated with the pyrolytic carbon to a density of up to maximum 1.0 g/cm³, that the pyrolytic carbon infiltrated CFC blank is infiltrated with a volume of melted silicon so that its density is more than 1.8 g/cm³, and that the conversion of the silicon with the pyrolytic graphite is conducted in such a manner that the content of the non-converted metallic silicon in the component is at least 15 %-by-weight of the component.

2. A process according to claim 1, **characterized in that** a CFC solid body with a density of between 0.1 and 0.6 g/cm³ is produced.

3. A process according to claim 1 or 2, **characterized in that** the short carbon fibres have a length between 1 and 50 mm.

4. A process according to one of the above claims, **characterized in that**, for the purpose of producing the CFC solid body, the short carbon fibres are suspended at a volume between 5 and 60 %-by-weight in the resin bonding agent, which is dispersed in a solvent and capable of being hardened, whereafter the suspension is formed so as to correspond with the CFC solid body, and the resin bonding agent is hardened and then carbonized.

5. A process according to one of the above claims, **characterized in that** after carbonization of the resin bonding agent, the CFC solid body is subjected to a temperature of at least 2,000°C for the purpose of coating with graphite.

6. A process according to one of the above claims, **characterized in that** a phenol resin is used as a resin bonding agent.

7. A process according to one of the above claims, **characterized in that** graphite fibres are used as short carbon fibres.

8. A process according to one of the above claims, **characterized in that** the material removing processing of the CFC solid body into a CFC blank is carried out by turning, milling and/or grinding.

9. A process according to one of the above claims, **characterized in that** the CFC blank is infiltrated with pyrolytic carbon up to a density between 0.6 and 0.9 g.cm³.

10. A process according to one of the above claims, **characterized in that** the CFC blank is infiltrated with pyrolytic carbon until a free pore volume of the CFC blank between 10 and 70 %-by-volume remains.

11. A process according to one of the above claims, **characterized in that** the infiltration of the blank with pyrolytic carbon is carried out by chemical gas-phase separation.

12. A process according to claim 1, **characterized in that** the gas-phase separation is carried out with a mixture of a hydrocarbon and an inert carrier gas at a temperature between 800 and 1,200°C and at a pressure between 1 and 100 millibar.

13. A process according to one of the above claims, **characterized in that** the CFC blank is infiltrated with such a quantity of melted silicon that its density is more than 2 g/cm³.

14. A process according to one of the above claims, **characterized in that** the CFC blank is set, for the purpose of infiltration with the melted silicon, with its bottom end into melted silicon, and that the melted silicon rises, by capillary force of the blank, upwards in the blank.

15. A process according to one of the above claims, **characterized in that** the content of the non-converted metallic silicon in the component is between 25 and 40 %-by-weight.

16. Use of the process according to one of the above claims for the manufacture of hollow bodies.

17. Use according to claim 16 for the production of the combustion chamber or nozzle of an engine for satellite attitude control as well as the gas duct bend for ignition of a rocket engine.

## Revendications

1. Procédé de fabrication d'un élément de construction résistant à l'oxydation, notamment d'un élément destiné à l'astronautique, selon lequel on fabrique à partir de fibres courtes de carbone et d'un liant-résine durcissable, par carbonisation du liant-résine, une ébauche CFC aux dimensions de l'élément qui présente des fibres de carbone, courtes, non orientées, l'ébauche CFC état ensuite infiltrée avec du carbone de pyrolyse puis du silicium fondu, le silicium se transformant partiellement avec le carbone de pyrolyse en carbure de silicium, caractérisé par le fait que l'on fabrique à partir des fibres courtes de carbone et du liant-résine un corps CFC massif présentant une masse volumique maximale de 0,8 g/cm³, par le fait qu'à partir du corps CFC massif on fabrique par usinage par enlèvement de matière l'ébauche CFC au dimensions de l'élément, par le fait que l'on infiltre l'ébauche CFC avec le carbone de pyrolyse jusqu'à obtention d'une masse volumique maximale de 1.0 g/cm³, par le fait qu'on infiltre l'ébauche CFC infiltreé avec du carbone de pyrolyse avec du silicium fondu en quantité telle que la masse volumique de l'ébauche soit supérieure à 1,8 g/cm³ et par le fait que l'on opère la transformation du silicium avec le carbone de pyrolyse de manière telle que la teneur en silicium métallique non transformé dans l'élément représente au moins 15 % en poids dudit élément.

2. Procédé selon la revendication 1, caractérisé par le fait que l'on fabrique un corps CFC massif présentant une masse volumique comprise entre 0,1 et 0,6 g/cm³.

3. Procédé selon la revendication 1 ou la revendication 2, caractérisé par le fait que les fibres courtes de carbone ont une longueur comprise entre 1 et 50 mm.

4. Procédé selon l'une des revendications précédentes, caractérisé par le fait que pour fabriquer le corps CFC massif on réalise une suspension des fibres courtes de carbone dans le liant-résine thermodurcissable dispersé dans un solvant, avec une proportion de fibres comprise entre 5 et 60 % en poids, puis on verse la suspension dans un moule dont la forme correspond à celle du corps CFC massif, on fait durcir le liant-résine et on le carbonise.

5. Procédé selon l'une des revendications précédentes, caractérisé par le fait qu'après carbonisation du liant-résine, on porte le corps CFC massif à une température d'au moins 2000 °C afin d'opérer la graphitisation.

6. Procédé selon l'une des revendications précédentes, caractérisé pu le fait que l'on utilise comme liant-résine une résine phénolique.

7. Procédé selon l'une des revendications précédentes, caractérisé par le fait que l'on utilise comme fibres courtes de carbone des fibres de graphite.

8. Procédé selon l'une des revendications précédentes, caractérisé par le fait que l'on réalise l'usinage par enlèvement de matière du corps CFC massif destiné à réaliser une ébauche CFC, par tournage, fraisage et/ou meulage.

9. Procédé selon l'une des revendications précédentes, caractérisé par le fait que l'on infiltre l'ébauche CFC avec du carbone de pyrolyse jusqu'à obtention d'une masse volumique comprise entre 0,6 g/cm³ et 0,9 g/cm³.

10. Procédé selon l'une des revendications précédentes, caractérisé par le fait que l'on infiltre l'ébauche CFC avec le carbone de pyrolyse tant qu'il reste dans l'ébauche CFC un volume de pores libres compris entre 10 et 70 % du volume.

11. Procédé selon l'une des revendications précédentes, caractérisé pu le fait que l'on réalise l'infiltration de l'ébauche CFC avec du carbone de pyrolyse par dépôt chimique en phase gazeuse.

12. Procédé selon la revendication 11, caractérisé par le fait que l'on opère le dépôt chimique en phase gazeuse avec un mélange d'hydrogène et d'un gaz-support inerte à une température comprise entre 800 et 1200 °C et sous une pression comprise entre 1 et 100 millibars.

13. Procédé selon l'une des revendications précédentes, caractérisé par le fait que l'on infiltre l'ébauche CFC avec du silicium fondu en quantité telle que sa masse volumique soit supérieure à 2 g/cm³.

14. Procédé selon l'une des revendications précédentes, caractérisé par le fait que pour infiltrer l'ébauche CFC avec du silicium fondu, on plonge l'extrémité inférieure de celle-ci dans le silicium fondu, ledit silicium fondu montant dans l'ébauche sous l'effet des forces de capillarité de celle-ci.

15. Procédé selon l'une des revendications précédentes, caractérisé par le fait que la teneur en silicium métallique non transformé dans l'élément est comprise entre 25 et 40 % en poids.

16. Application du procédé conforme à l'une des revendications précédentes pour fabriquer des corps de creux.

17. Application selon la revendication 16 pour fabriquer la chambre de combustion ou la tuyère d'un propulseur de réglage d'attitude d'un satellite ainsi que pour fabriquer le tube d'amenée de gaz pour l'allumage d'un propulseur de fusée.
